# EUROPÄISCHE PATENTSCHRIFT

(11) **EP 2 464 473 B1**
(45) Veröffentlichungstag und Bekanntmachung des Hinweises auf die Patenterteilung: **15.05.2013**
(21) Anmeldenummer: 10744848.2
(22) Anmeldetag: 07.07.2010
(51) Int. Cl.: B21F 13/00, B21D 19/00, B21D 31/04, B23D 1/26, B23D 1/00

(54) **VERFAHREN ZUM VIELADRIGEN ENTGRATEN VON DRAHTADERN UND ZUGEHÖRIGE VORRICHTUNG**
METHOD FOR THE MULTI-CORE DEBURRING OF WIRES AND ASSOCIATED DEVICE
PROCÉDÉ POUR L'ÉBAVURAGE MULTIBRIN DE BRINS DE FIL ET DISPOSITIF CORRESPONDANT

(30) Priorität: 14.08.2009 DE 102009037643
(43) Veröffentlichungstag der Anmeldung: 20.06.2012
(73) Patentinhaber: Hacanoka GmbH, 89269 Vöhringen (DE)
(72) Erfinder: STAHL, Karl-Hermann, 89269 Vöhringen (DE)
(74) Vertreter: Dziewior, Joachim
(86) Internationale Anmeldenummer: PCT/DE2010/000785
(87) Internationale Veröffentlichungsnummer: WO 2011/018063

(56) Entgegenhaltungen:
- EP-A2- 1 356 887
- WO-A1-2008/135002
- GB-A- 1 247 943
- JP-A- 61 067 502
- US-A- 2 635 493
- US-A- 2 775 151
- US-A- 4 008 597
- US-A- 5 477 721
- DATABASE WPI Week 197612 Thomson Scientific, London, GB; AN 1976-C6804X XP002608314 -& SU 471 164 A1 25. Mai 1975 (1975-05-25)

## Beschreibung

Die Erfindung betrifft ein Verfahren zum vieladrigen Entgraten von Drahtadern, vorzugsweise von aus einer Vielzahl von parallel zueinander angeordneten und aus einem Drahtadernband vereinzelten Drahtadern, insbesondere zur Herstellung von Runddrähten und Formdrähten, wobei zur Ausbildung der Drahtadern des Drahtadernbandes zunächst ein Blechband entweder einseitig oder beidseitig gegenüberliegend vorgekerbt wird, worauf die nach dem Kerben noch mit Stegen verbundenen Drahtadern zur anschließenden Umbildung der Stege zu dünnen, leicht voneinander trennbaren und beim Abtrennen glatte und gratarme Trennflächen bildenden Trennstegen einem Walkprozess unterworfen werden, wodurch jeder Steg eine mehrfache Biegeverformung um seine Längsachse derart erfährt, dass im Bereich der Stege den Trennsteg bildende Anrisse durch Dauerbruch entstehen, wobei der Trennsteg auch örtlich getrennt sein kann. Die Herstellung eines derartigen Drahtadernbandes ist in der WO 2008/135002 beschrieben.

Bei der herkömmlichen Runddrahtfertigung wird im Wesentlichen in einer Ader gegossen, stranggepresst oder warmgewalzt und im Anschluss daran zum Beispiel geschält, geschabt, gebeizt, usw., worauf dann diese Ader gezogen wird, bis die gewünschte Endabmessung erreicht ist.

Aus einem Drahtadernband nach obiger Beschreibung können einzelne Drahtadern mit zum Beispiel sehr kleiner Abmessung, zum Beispiel kleiner 1 mm Durchmesser entnommen werden für eine Weiterverarbeitung in einer herkömmlichen Drahtfertigung. Die gesamte Vorfertigung erfolgt dann durch Walzen, was in der Regel wirtschaftlicher ist, es können aber auch zum Beispiel für die Fein- und Feinstdrahtfertigung eine Vielzahl von Drahtadern gleichzeitig dem aus einem Blechband hervorgegangenen Drahtadernband entnommen werden, wobei man dann nur einen ablaufenden Vormaterialring hat, der in der Vorfertigung ausschließlich durch Walzen hergestellt wurde. Aus Qualitätsgründen ist es zweckmäßig, wenn die Trennflächen mit Trennsteg und Trennstegreste von den Drahtadern entfernt werden.

Der Erfindung liegt daher die Aufgabe zugrunde, ein Verfahren zur Entgratung von Drahtadern zu schaffen, die aus der Vereinzelung eines aus einem Blechband geformten Drahtadernbandes entstanden sind.

Diese Aufgabe wird nach der Erfindung dadurch gelöst, dass die Drahtadern nach Durchlaufen eines Trennwalzenpaares von einer Spreizwalzeneinheit nach geradzahligen und ungeradzahligen Drahtadern derart aufgespreizt werden, daß zwei Stränge von gegenseitig beabstandeten Drahtadern gebildet werden, daß weiter die beiden Stränge von Drahtadern unter einer einstellbaren Zugspannung jeweils eine mit Entgratungsschneiden versehene Entgratungsstation durchlaufen, wobei die Zugspannung so gewählt ist, daß durch die Wirkung des Kerbwinkels und des Anstellwinkels der Entgratungsschneiden eine selbsttätige, mittige Zentrierung und somit ein beidseitig gleichmäßiger Spanabtrag an den Drahtadern erfolgt, und daß anschließend die Drahtadern in einer aus Walzen bestehenden Zugeinheit wieder zu einem gemeinsamen Strang von Drahtadern vereinigt werden, um gleichmäßige Zugbedingungen für alle Adern zu erhalten und die Drähte einer Weiterverarbeitung zuzuführen.

Der durch die Erfindung erreichte Vorteil besteht im Wesentlichen darin, dass durch die Trennung der an sich zunächst dicht aneinander liegenden Drahtadern in zwei Stränge nunmehr in jedem Strang zwischen den Drahtadern ein Abstand von der Breite einer Drahtader besteht, wodurch die Möglichkeit geschaffen wird, seitlich im Bereich der ursprünglich vorhandenen Trennstege eine Entgratung vorzunehmen. Durch die anschließende erneute Vereinigung der beiden Stränge in der Zugeinheit können die dann entgrateten Drahtadern der Weiterverarbeitung zugeführt werden. Sofern auf andere Weise sichergestellt ist, dass auf beide Stränge die gleiche Zugkraft aufgebracht wird, zum Beispiel über entsprechend angesteuerte Elektromotoren, so kann auf das abschließende Zusammenführen der beiden Stränge auch verzichtet werden. Es können also, soweit dies verfahrensmäßig wünschenswert ist, beide Stränge auch einer getrennten Weiterverarbeitung zugeführt werden. Wenn der Abstand zwischen den Spreizwalzen und der Zugeinheit groß genug gewählt wird
und die Entgratungsstationen dann mittig dazwischen positioniert werden, so richten sich die einzelnen Drahtadern bei angepasster Zugspannung jeweils mittig zu den Entgratungsscheiden des Entgratungswerkzeuges selbsttätig aus, weil durch die Schrägen der Kerbungen (für die ein Kerbwinkel im Bereich von 45° bis 90° vorteilhaft ist) sich die Spanbreiten der Späne auf beiden Seiten der Drahtadern selbsttätig gleich breit einstellen. Dadurch kann eine horizontale Führung der Drahtadern vor den Entgratungswerkzeugen entfallen. Der Spandruck reicht aus, um die Drahtadern entsprechend mittig einzustellen. Im Ergebnis werden die Oberflächen der Trennflächen auf beiden Seiten der jeweiligen Drahtader zuverlässig beidseitig vollständig beseitigt, was aus Qualitätsgründen notwendig ist.

In bevorzugter Ausgestaltung der Erfindung durchlaufen dabei die Drahtadern in der Entgratungsstation ein mit Zinken versehenes, kammartiges Entgratungswerkzeug, wobei die Entgratungsschneiden von den Zinken gebildet sind.

Weiter ist es wichtig, dass die Drahtadern in der Entgratungsstation unter Zugspannung transportiert werden, wobei die mit Führungsrillen versehene Zugeinheit die auch für den Vorschub der Drahtadern erforderliche Zugkraft und das Trennwalzenpaar sowie die mit Führungsrillen versehene Spreizwalzeneinheit eine Bremskraft erzeugen. Durch geeignete Abstimmung dieser Einheiten aufeinander kann eine Einstellung der jeweils zweckmäßigen Spannung vorgenommen werden. Dabei kann es auch vorteilhaft sein, wenn zwischen beiden Einheiten die Zugspannung der Drahtadern stufenlos geregelt werden kann.

Weiter hat es sich im Rahmen der Erfindung als vorteilhaft herausgestellt, wenn die Drahtadern für einen gleichmäßigen, beidseitigen Entgratungsvorgang im Bereich vor und nach der Entgratungsstation keine horizontale Zwangsführung erfahren. Dadurch kann die Drahtader von den beiden links und rechts angreifenden Schneiden derart in horizontaler Richtung auf Mittigkeit ausgerichtet werden, dass eine gleichmäßige, beidseitige Entgratung erreicht wird. Der Effekt der Selbstausrichtung der Drahtadern im Entgratungswerkzeug ist am wirksamsten, wenn das Breitenzu Dickenverhältnis nicht wesentlich größer als 1:1 ist. Des Weiteren sieht die Erfindung weiter vor, dass die Drahtadern vor den Entgratungswerkzeugen mit nur leichtem Andruck über jeweils eine Führungsrolle geführt werden, dieser also nur ganz leicht aufliegen. Hierdurch wird eine Schwingungsdämpfung erreicht und ferner sichergestellt, dass die Drahtadern nicht verdreht durch das Entgratungswerkzeug laufen, wobei die Möglichkeit einer horizontalen Ausrichtung auf Mittigkeit nach wie vor besteht.

Das Einbringen eines neuen Drahtadernbandes in die Entgratungsstation ist insofern aufwendig, weil der Anfang des Drahtadernbandes in den vorgeschalteten Trennwalzen nicht getrennt wird und das Drahtadernband bei nicht eingebauten Spreizwalzen bis zur Zugeinheit geführt und eingefädelt wird. Beim weiteren Einrichten werden die Trennwalzen aktiviert und das Drahtadernband getrennt, bis die getrennten Drahtadern die Zugeinheit erreicht haben. Danach wird zwischen den Trennwalzen und der Zugeinheit so viel Drahtadernlänge erzeugt, dass die Spreizwalzen eingebaut werden können. Dabei wird die Drahtadernschar aufgeteilt, so dass zum Beispiel alle ungeraden Adernnummern über die obere Spreizwalze geführt werden und alle geraden Adernnummer über die untere Spreizwalze laufen und dort jeweils in die entsprechenden Führungsrillen eingelegt werden. Danach werden die Adern unter Zugspannung gebracht und die Entgratwerkzeuge eingebaut. Um dies möglichst selten tun zu müssen, ist es sinnvoll, lange Drahtadernbänder einzusetzen, wobei jedoch auch deren Länge nicht unbegrenzt sein kann. Daher wird im Rahmen der Erfindung weiter vorgeschlagen, dass das Drahtadernband vor dem Eintritt in das Trennwalzenpaar eine Schweißstation durchläuft, in der bei Erreichen des Endes eines Drahtadernbandes ein neues Drahtadernband stumpf derart angeschweißt wird, dass die einzelnen Drahtadern zueinander fluchten. Auf diese Weise kann das Verfahren grundsätzlich mit einem "endlosen" Drahtadernband durchgeführt werden, solange jedenfalls Drahtadernbänder gleicher Abmessungen und Geometrie zur Verarbeitung kommen. Es hat sich nämlich gezeigt, dass die Schweißnaht keinen ungünstigen Einfluss auf die Trennung der einzelnen Drahtadern voneinander im Bereich des Trennsteges hat, insbesondere dann nicht, wenn gemäß einem weiteren Vorschlag der Erfindung die an der Schweißnaht sich bildende Schweißraupe beidseits des Drahtadernbandes plan abgeschliffen und auch die Schweißraupe im Bereich der Kerben mit einem entsprechend geformten Werkzeug durch gleichzeitiges Schleifen auf der Ober- und Unterseite des Drahtbandes weitgehend entfernt wird.

In vorrichtungsmäßiger Hinsicht wird die erfindungsgemäße Aufgabe gelöst durch eine Entgratungsstation für ein Drahtadernband, das von einem einseitig oder beidseitig vorgekerbten Blechband gebildet ist, bei welchem die nach dem Kerben noch mit Stegen verbundenen Drahtadern zur anschließenden Umbildung der Stege zu dünnen, leicht voneinander trennbaren und beim Abtrennen glatte und gratarme Trennflächen bildenden Trennstegen einem Walkprozess unterworfen wurden, wodurch im Bereich der Stege nach einer mehrfachen Biegeverformung um deren Längsachse einen Trennsteg bildende Anrisse durch Dauerbruch entstehen, wobei der Trennsteg auch örtlich getrennt sein kann und die Entgratungsstation ein das Drahtadernband zu Drahtadern vereinzelndes Trennwalzenpaar aufweist, ferner durch eine Spreizwalzeneinheit, in der eine Aufspreizung der geradzahligen gegenüber den ungeradzahligen Drahtadern derartig erfolgt, dass zwei Stränge von gegenseitig beabstandeten Drahtadern gebildet werden, ferner durch jeweils ein Entgratungswerkzeug für die beiden Stränge von Drahtadern, sowie eine aus Walzen bestehende Zugeinheit, in der die Drahtadern wieder zu einem gemeinsamen Strang vereinigt werden.

Hierbei weist das Entgratungswerkzeug in vorteilhafter Weise kammartig angeordnete Zinken auf, wobei die Zinken Entgratungsschneiden bildend ausgebildet sind.

Vorteilhaft ist hierbei weiter, wenn das Entgratungswerkzeug schräg zur Laufrichtung der Drahtadern ausgerichtet ist, so daß der Selbstausrichtungseffekt der Drahtadern verstärkt wird, weil die Spanbreite vergrößert wird und außerdem eine gezielte Späneabfuhr nach unten gewährleistet ist.

Ungeachtet des betriebsmäßig konkret gewählten bzw. sich einstellenden Winkels zwischen den Drahtadern und dem Entgratungswerkzeug hat sich hierfür ein Wert von ca. 45° als vorteilhaft erwiesen.

Weiter ist im Rahmen der Erfindung vorgesehen, dass das Entgratungswerkzeug in Längsrichtung der Zinken verstellbar ist. Hierdurch besteht die Möglichkeit, das Entgratungswerkzeug nachzustellen, wenn die Schneide im Arbeitsbereich stumpf geworden ist.

Um schließlich die vereinzelten Drahtadern in geordneter Anordnung und Ausrichtung dem Entgratungswerkzeug zuführen zu können, kann es vorteilhaft sein, wenn die Walzen der Spreizwalzeneinheit und der Zugeinheit mit Führungsrillen für die Drahtadern versehen sind. Das Entgratungswerkzeug sollte mittig zwischen den Spreizwalzen und der Zugeinheit platziert werden; dabei muss der Abstand von den Spreizwalzen zur Zugeinheit groß genug gewählt werden, damit die Drahtadern sich leicht in horizontaler Ebene entsprechend dem Spandruck selbsttätig ausrichten können.

Im Folgenden wird die Erfindung an einem in der Zeichnung dargestellten Ausführungbeispiel näher erläutert; es zeigen:
- Fig. 1: eine Vorrichtung zur Durchführung des erfindungsgemäßen Verfahrens in schematischer Seitenansicht,
- Fig. 2: eine Ansicht auf das Entgratungswerkzeug in Produktionsrichtung,
- Fig. 3: eine Seitenansicht des Gegenstands nach Fig. 2,
- Fig. 4: eine ausschnittsweise Detaildarstellung aus der Fig. 2.

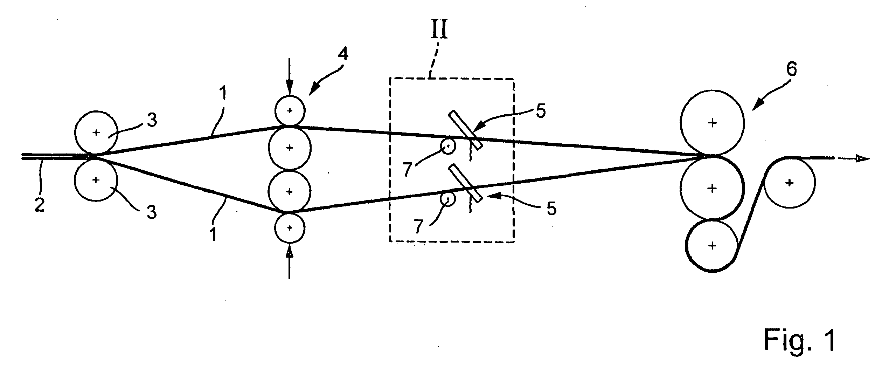

Die in Fig. 1 dargestellte Anordnung dient der Entgratung von Drahtadern 1, die von einem Drahtadernband 2 mit einer Vielzahl von parallel zueinander angeordneten Drahtadern vereinzelt werden. Dieses Entgratungsverfahren ist insbesondere vorgesehen für die Herstellung von Rund- und/oder Formdrähten.

Zur Ausbildung der Drahtadern 1 des dieser dargestellten Anordnung zugeführten Drahtadernbandes 2 wird zunächst ein Blechband einseitig oder beidseitig vorgekerbt, worauf die nach dem Kerben noch über Stege verbundenen Drahtadern 1 anschließend einem Walkprozess unterworfen werden, so dass die Stege zu dünnen, leicht voneinander trennbaren und beim Abtrennen glatte und gratarme Trennflächen bildenden Trennstegen umgebildet werden. Bei diesem Walkprozess erfährt jeder Steg eine mehrfache Biegeverformung um seine Längsachse derart, dass im Bereich der Stege Anrisse durch Dauerbruch entstehen, die den Trennsteg bilden, der auch noch örtlich getrennt werden kann.

Dieses derart ausgebildete Drahtadernband 2 durchläuft in der Anordnung nach Fig. 1 zunächst ein Trennwalzenpaar 3, das die noch über Trennstege bzw. Trennstegreste miteinander verbundenen Drahtadern 1 voneinander trennt. Eine dem Trennwalzenpaar 3 nachgeschaltete Spreizwalzeneinheit 4 spreizt die nunmehr vereinzelten Drahtadern 1 nach geradzahligen und ungeradzahligen Adern derart auf, dass zwei Stränge von gegenseitig beabstandeten Drahtadern 1 gebildet werden. Da jeder der beiden Stränge nur jeweils jede zweite Drahtader des ursprünglichen Drahtadernbandes 2 enthält, entstehen hierdurch zwischen den Drahtadern 1 Lücken von jeweils ca. der Breite der fehlenden, dem anderen Strang zugeordneten Drahtader 1.

Diese beiden Stränge von Drahtadern 1 durchlaufen anschließend jeweils ein Entgratungswerkzeug 5 und werden anschließend in einer aus Walzen bestehenden Zugeinheit 6 wieder zu einem gemeinsamen Strang von Drahtadern 1 vereinigt.

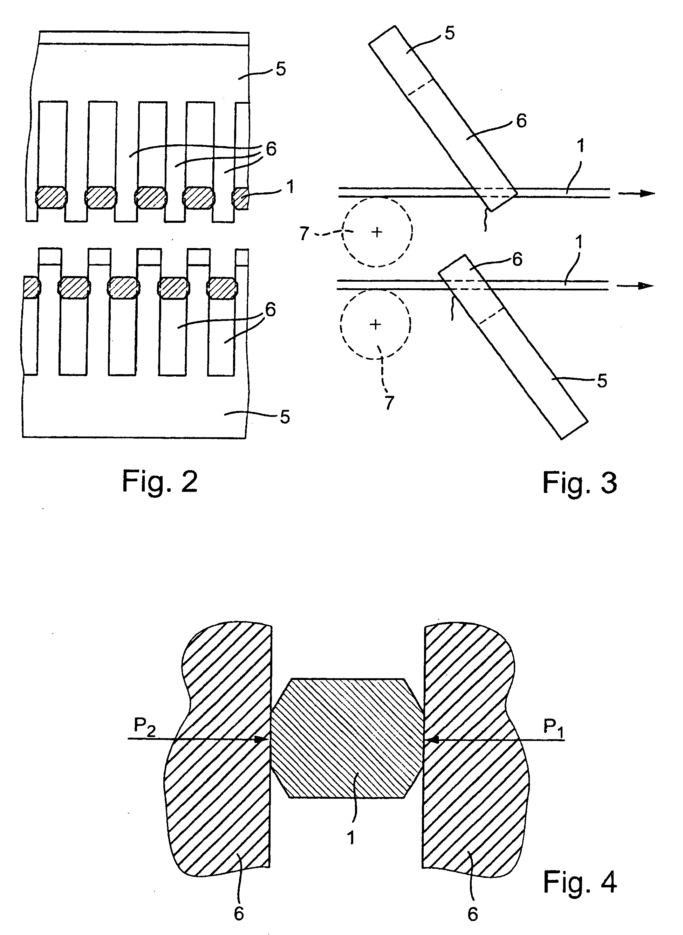

Die beiden Entgratungswerkzeuge 5 sind, wie insbesondere aus der Fig. 2 zu ersehen ist, kammartig ausgebildet, wobei die Zinken 6 randseitig Schneiden für den Entgratungsvorgang bilden.

Die Drahtadern 1 werden in der Entgratungsstation unter Spannung transportiert, wobei die Zugeinheit 6 die auch für den Vorschub der Drahtadern 1 benötigte Zugkraft erzeugt, während das Trennwalzenpaar 3 sowie die Spreizwalzeneinheit 4 eine Bremskraft erzeugen, so dass im Zusammenspiel dieser Einheiten die erforderliche Zugspannung entsteht, mit der die Drahtadern 1 vor dem Entgratungswerkzeug 5 durch leichtes Aufliegen auf einer horizontal angeordneten Führungsrolle 7 vertikal ausgerichtet werden. Die Führungsrolle 7 unterdrückt ferner ein Vibrieren der Drahtadern 1.

In horizontaler Richtung stellen sich die Drahtadern 1 für einen gleichmäßigen, beidseitigen Entgratungsvorgang selbsttätig ein, weil sich - bedingt durch die Kerbschräge - die Spanbreite auf beiden Seiten der Drahtader 1 durch den Spandruck in etwa gleich einstellt und somit die Drahtader mittig zu den Schneiden des Entgratungswerkzeugs ausgerichtet wird. Diese Selbstausrichtung ist am wirksamsten bei einem Breiten- / Dickenverhältnis von ca. 1:1, also bei nicht allzu großer Breite der Drahtader.

Da das Einlegen eines neuen Drahtadernbandes 2 im Hinblick auf die erforderliche Aufspreizung der einzelnen Drahtadern 1 aufwendig ist, empfiehlt es sich, mit "endlosen" Drahtadernbändern 2 zu arbeiten. Um dieses Ziel zu erreichen, kann vor dem Trennwalzenpaar 3 eine Schweißstation angeordnet sein, mit deren Hilfe an das Ende des durchgelaufenen Drahtadernbandes 2 der Anfang eines neuen Drahtadernbandes 2 stumpf derart angeschweißt wird, dass die einzelnen Drahtadern 1 zueinander fluchten. Die hierbei an der Schweißnaht sich bildende Schweißraupe kann dann beidseitig des Drahtadernbandes 2 in in der Zeichnung nicht näher dargestellter Weise plan abgeschliffen werden und auch die Schweißraupe im Bereich der Kerben entfernt wird, so dass anschließend gewährleistet ist, dass auch im Bereich der Schweißnaht eine problemlose Trennung der Drahtadern 1 voneinander möglich ist.

Die Zinken 6 mit den Schneiden des Entgratungswerkzeugs 5 sind, wie sich aus der Fig. 3 ersehen lässt, schräg zur Laufrichtung der Drahtadern 1 ausgerichtet, wodurch die Spanbreite etwas vergrößert wird und dadurch der Spandruck, der die Selbstausrichtung der Drahtader bewirkt, sich ebenfalls vergrößert, und im Übrigen die Späne, die bei der Entgratung anfallen, gezielt nach unten geleitet werden. Des Weiteren ist das Entgratungswerkzeug 5 in Längsrichtung der Zinken 6 verstellbar, so dass eine Nachstellung möglich ist, sobald die von den Zinken gebildeten Schneiden im Arbeitsbereich stumpf sind.

## Patentansprüche

1. Verfahren zum vieladrigen Entgraten von Drahtadern, vorzugsweise von aus einer Vielzahl von parallel zueinander angeordneten und aus einem Drahtadernband vereinzelten Drahtadern (1), insbesondere zur Herstellung von Runddrähten und Formdrähten, wobei zur Ausbildung der Drahtadern (1) des Drahtadernbandes (2) zunächst ein Blechband entweder einseitig oder beidseitig vorgekerbt wird, worauf die nach dem Kerben noch mit Stegen verbundenen Drahtadern (1) zur anschließenden Umbildung der Stege zu dünnen, leicht voneinander trennbaren und beim Abtrennen glatte und gratarme Trennflächen bildenden Trennstegen einem Walkprozess unterworfen werden, wodurch jeder Steg eine mehrfache Biegeverformung um seine Längsachse derart erfährt, daß im Bereich der Stege den Trennsteg bildende Anrisse durch Dauerbruch entstehen, wobei der Trennsteg auch noch örtlich getrennt sein kann, **dadurch gekennzeichnet, daß** die Drahtadern (1) nach Durchlaufen eines Trennwalzenpaares (3) von einer Spreizwalzeneinheit (4) nach geradzahligen und ungeradzahligen Drahtadern derart aufgespreizt werden, daß zwei Stränge von gegenseitig beabstandeten Drahtadern (1) gebildet werden, daß weiter die beiden Stränge von Drahtadern (1) unter einer einstellbaren Zugspannung jeweils eine mit Entgratungsschneiden versehene Entgratungsstation durchlaufen, wobei die Zugspannung so gewählt ist, daß durch die Wirkung des Kerbwinkels und des Anstellwinkels der Entgratungsschneiden eine selbsttätige, mittige Zentrierung und somit ein beidseitig gleichmäßiger Spanabtrag an den Drahtadern (1) erfolgt, und daß anschließend die Drahtadern (1) in einer aus Walzen bestehenden Zugeinheit (6) wieder zu einem gemeinsamen Strang von Drahtadern (1) vereinigt werden.

2. Verfahren nach Anspruch 1, **dadurch gekennzeichnet, daß** die Entgratungsstation ein mit Zinken (6) versehenes, kammartiges Entgratungswerkzeug aufweist, wobei die Entgratungsschneiden von den Zinken gebildet sind.

3. Verfahren nach Anspruch 1 oder 2, **dadurch gekennzeichnet, daß** die Zugeinheit (6) nach der Entgratungsstation die für die Entgratung vorgesehene Zugspannung sowie eine für den Vorschub der Drahtadern (1) erforderliche Zugkraft und das Trennwalzenpaar (3) sowie die Spreizwalzeneinheit (4) eine entgegengerichtete Bremskraft erzeugen und beide Einheiten mit Führungsrillen für die Drahtadern versehen sind.

4. Verfahren nach einem der Ansprüche 1 bis 3, **dadurch gekennzeichnet, daß** die Drahtadern (1) für einen gleichmäßigen, beidseitigen Entgratungsvorgang im Bereich vor und nach der Entgratungsstation in horizontaler Ebene keine Zwangsführung erfahren.

5. Verfahren nach einem der Ansprüche 1 bis 3, **dadurch gekennzeichnet, daß** die Drahtadern (1) vor den Entgratungswerkzeugen (5) mit nur leichtem Andruck über jeweils eine glatte Führungsrolle (7) vertikal geführt werden.

6. Verfahren nach einem der Ansprüche 1 bis 5, **dadurch gekennzeichnet, daß** das Drahtadernband (2) vor dem Eintritt in das Trennwalzenpaar (3) eine Schweißstation durchläuft, in der bei Erreichen des Endes eines Drahtadernbandes (2) ein neues Drahtadernband (2) stumpf derart angeschweißt wird, daß die einzelnen Drahtadern (1) zueinander fluchten.

7. Verfahren nach Anspruch 6, **dadurch gekennzeichnet, daß** die an der Schweißnaht sich bildende Schweißraupe beidseitig des Drahtadernbandes (2) plan abgeschliffen und auch die Schweißraupe im Bereich der Kerben mit einem entsprechend geformten Werkzeug durch beidseitiges und gleichzeitiges Schleifen auf der Ober- und Unterseite des Drahtadernbandes weitgehend entfernt wird.

8. Vorrichtung zur Durchführung des Verfahrens nach den Ansprüchen 1 bis 7, **gekennzeichnet durch** eine Entgratungsstation für ein Drahtadernband (2), das von einem einseitig oder beidseitig vorgekerbten Blechband gebildet ist, bei welchem die nach dem Kerben noch mit Stegen verbundenen Drahtadern (1) zur anschließenden Umbildung der Stege zu dünnen, leicht voneinander trennbaren und beim Abtrennen glatte und gratarme Trennflächen bildenden Trennstegen einem Walkprozess unterworfen wurden, wodurch im Bereich der Stege nach einer mehrfachen Biegeverformung um deren Längsachse einen Trennsteg bildende Anrisse **durch** Dauerbruch entstehen, der noch örtlich getrennt sein kann, wobei die Entgratungsstation ein das Drahtadernband (2) zu Drahtadern (1) vereinzelndes Trennwalzenpaar (3) aufweist, ferner **durch** eine Spreizwalzeneinheit (4), in der eine Aufspreizung der geradzahligen gegenüber den ungeradzahligen Drahtadern (1) derart erfolgt, daß zwei Stränge von gegenseitig beabstandeten Drahtadern (1) gebildet werden, ferner **durch** jeweils ein Entgratungswerkzeug (5) für die beiden Stränge von Drahtadern (1), sowie eine aus Walzen bestehende Zugeinheit (6), in der die Drahtadern (1) wieder zu einem gemeinsamen Strang vereinigt werden, damit auf alle Adern in etwa der gleiche Zug wirksam wird.

9. Vorrichtung nach Anspruch 8, **dadurch gekennzeichnet, daß** das Entgratungswerkzeug (5) kammartig angeordnete Zinken (6) aufweist, wobei die Zinken (6) Entgratungsschneiden bildend ausgebildet ist.

10. Vorrichtung nach Anspruch 9, **dadurch gekennzeichnet, daß** die Zinken (6) schräg zur Laufrichtung der Drahtadern (1) ausgerichtet sind.

11. Vorrichtung nach Anspruch 9 oder 10, **dadurch gekennzeichnet, daß** die Zinken (6) unter einem Winkel von ca. 45° zu den Drahtadern (1) ausgerichtet sind.

12. Vorrichtung nach einem der Ansprüche 9 oder 11, **dadurch gekennzeichnet, daß** das Entgratungswerkzeug (5) in Längsrichtung der Zinken (6) verstellbar ist.

13. Vorrichtung nach einem der Ansprüche 9 bis 12, **dadurch gekennzeichnet, daß** die Walzen der Spreizwalzeneinheit (4) und der Zugeinheit (6) mit Führungsrillen für die Drahtadern (1) versehen sind.

## Claims

1. A method for simultaneously deburring a multiplicity of wire conductors, preferably a plurality of wire conductors (1) separated from a wire conductor ribbon and parallel to each other, in particular for producing round and shaped wires, wherein a sheet metal ribbon is first pregrooved on one or both sides so as to create the wire conductors (1) of the wire conductor ribbon (2), after which the wire conductors (1) still connected after grooving by webs undergo a flexing process so as to convert the webs into thin frangible webs that are easily separable from each other and that form smooth and nearly burr-free edges when detached, each web undergoing repeated bending deformation about its longitudinal axis in such a way that incipient cracks forming the frangible web are created by fatigue failure at the webs, wherein the frangible web can also be opened locally, **characterized in that** the wire conductors (1), after passing through a separating roller pair (3), are spread apart according to even-numbered and odd-numbered wire conductors by a spreading roller unit (4) such that two arrays of mutually spaced wire conductors (1) are created, wherein furthermore the two arrays of wire conductors (1) pass under adjustable tension through respective deburring stations provided with respective deburring cutters, the draw tension being selected such that an automatic, central alignment, and thus a two-sided uniform removal of chips, is effected on the wire conductors (1) due to the action of the groove-flank angle and of the adjusted angle of the deburring cutters, and wherein finally the wire conductors (1) are reunited into a common group of wire conductors (1) by rollers of a drawing unit (6).

2. The method according to claim 1, **characterized in that** the deburring station includes a comb-like deburring device that is provided with tines (6) that form the deburring cutters.

3. The method according to claims 1 or 2, **characterized in that** the drawing unit (6) downstream of the deburring station generates the draw tension intended for deburring as well as the draw force required to advance the wire conductors (1), and the separating roller pair (3) and the spreading roller unit (4) generate an opposing braking force, and both units are provided with guide grooves for the wire conductors.

4. The method according to one of claims 1 through 3, **characterized in that** the wire conductors (1) are not subjected to restricted guidance in the horizontal plane so as to provide a uniform, two-sided deburring operation in the region upstream and downstream of the deburring station.

5. The method according to one of claims 1 through 3, **characterized in that** the wire conductors (1) are guided vertically upstream of each of the deburring devices (5) only under light applied pressure across one respective smooth guide roller (7).

6. The method according to one of claims 1 through 5, **characterized in that** the conductor ribbon (2) passes through a welding station before entering the separating roller pair (3), in which station a new conductor ribbon (2) is welded on when the end of a conductor ribbon (2) has been reached such that the individual wire conductors (1) are flush with each other.

7. The method according to claim 6, **characterized in that** the welding bead formed on the welding seam is ground flat on both sides of the conductor ribbon (2), and the welding bead at the grooves is also almost completely removed by an appropriately shaped tool by bilaterally and simultaneously grinding the top side and bottom side of the conductor ribbon.

8. An apparatus for carrying out the method according to claims 1 through 7, **characterized by** a deburring station for a conductor ribbon (2) that is formed from a metal sheet in which wire conductors (1) still connected by webs after grooving undergo a flexing process so as to then transform the webs into thin frangible webs that are easily separable from each other and form smooth and nearly burr-free edges when detached, whereby, after undergoing repeated bending deformation about their longitudinal axis, incipient cracks forming the frangible webs are created by fatigue failure at the webs, which frangible web can also be opened locally, wherein the deburring station includes a separating roller pair (3) that separates the wire conductor ribbon (2) into wire conductors (1), furthermore by a spreading roller unit (4) in which even-numbered wire conductors are spread apart relative to uneven-numbered wire conductors (1) such that two arrays of mutually spaced wire conductors (1) are created, furthermore by a respective deburring device (5) for each of the two arrays of wire conductors (1), as well as rollers forming a drawing unit (6) in which the wire conductors (1) are reunited into a common group, so that approximately the same tension acts on all wire conductors.

9. The apparatus according to claim 8, **characterized in that** the deburring device (5) includes tines (6) arranged like in a comb and forming deburring cutters.

10. The apparatus according to claim 9, **characterized in that** the tines (6) are oriented at an acute angle to the travel direction of the wire conductors (1).

11. The apparatus according to claims 9 or 10, **characterized in that** the tines (6) are oriented at an angle of approximately 45? to the wire conductors (1).

12. The apparatus according to one of claims 9 or 11, **characterized in that** the deburring device (5) is adjustable in the longitudinal direction of the tines (6).

13. The apparatus according to one of claims 9 through 12, **characterized in that** the rollers of the spreading roller unit (4) and the drawing unit (6) are provided with guide grooves for the wire conductors (1).

## Revendications

1. Procédé d'ébavurage multibrin de brins de 5fil, de préférence de brins de fil d'un grand nombre de brins de fil disposés parallèlement l'un à l'autre et isolés d'une bande de brins de fil (1), en particulier pour la fabrication de fils ronds et de fils profilés, une bande de tôle étant d'abord préalablement entaillée )d'un côté ou des deux côtés pour la formation des brins de fil (1) de la bande de brins de fil (2), suite à quoi les brins de fil (1) encore reliés par des ponts après l'entaillage sont soumis à un processus de laminage pour la transformation subséquente des ponts en surfaces de séparation minces, facilement séparables l'une de l'autre et lisses et présentant peu de bavures lors de la séparation, suite à quoi chaque pont subit une telle déformation de flexion multiple autour de son axe longitudinal que des fissures formant la nervure de séparation apparaissent par rupture par fatigue dans la zone des ponts, la nervure de séparation pouvant également être localement séparée, **caractérisé en ce que** les brins de fil (1), après avoir traversé une paire de cylindres de séparation (3), sont écartés l'un de l'autre en brins de fil pairs et impairs par une unité de cylindres d'écartement (4) de façon à former deux faisceaux de brins de fil (1) écartés l'un de l'autre, **en ce que** les deux faisceaux de brins de fil (1) traversent en outre chacun une station d'ébavurage pourvue de taillants d'ébavurage sous l'action d'une tension de traction réglable, la tension de traction étant sélectionnée de telle façon que, sous l'action de l'angle d'entaille et de l'angle d'incidence des taillants d'ébavurage, un centrage médian automatique et ainsi un enlèvement de copeaux régulier a lieu des deux côtés des brins de fil (1), et **en ce que** les brins de fil (1) sont ensuite à nouveau réunis en un faisceau commun de brins de fil (1) dans une unité de traction (6) constituée de cylindres.

2. Procédé suivant la revendication 1, **caractérisé en ce que** la station d'ébavurage présente un outil d'ébavurage pourvu de dents (6) en forme de peigne, les taillants d'ébavurage étant formés par les dents.

3. Procédé suivant la revendication 1 ou 2, **caractérisé en ce que** l'unité de traction (6) génère après la station d'ébavurage la tension de traction prévue pour l'ébavurage ainsi qu'une force de traction nécessaire pour l'avancement des brins de fil (1) et **en ce que** la paire de cylindres de séparation (3) ainsi que l'unité de cylindres d'écartement (4) génèrent une force de freinage opposée et les deux unités sont pourvues de rainures de guidage pour les brins de fil.

4. Procédé suivant l'une des revendications 1 à 3, **caractérisé en ce que** les brins de fil (1) ne subissent aucun guidage forcé dans le plan horizontal dans la zone avant et après la station d'ébavurage afin d'assurer, des deux côtés, un processus d'ébavurage régulier.

5. Procédé suivant l'une des revendications 1 à 3, **caractérisé en ce que** les brins de fil (1) sont guidés uniquement verticalement d'une légère pression sur un cylindre de guidage lisse (7) respectif avant les outils d'ébavurage (5).

6. Procédé suivant l'une des revendications 1 à 5, **caractérisé en ce que** la bande de brins de fil (2) traverse une station de soudage avant l'entrée dans la paire de cylindres de séparation (3), dans laquelle, lorsque la fin d'une bande de brins de fil (2) est atteinte, une nouvelle bande de brins de fil (2) est soudée bout à bout, de façon à ce que les brins de fil individuels (1) soient alignés l'un sur l'autre.

7. Procédé suivant la revendication 6, **caractérisé en ce que** le cordon de soudure se formant à la soudure est aplani par meulage des deux côtés de la bande de brins de fil (2) et que le cordon de soudure est également en grande partie éliminé dans la zone des entailles par meulage simultané des deux côtés de la face supérieure et de la face inférieure de la bande de brins de fil à l'aide d'un outil formé en conséquence.

8. Dispositif d'exécution du procédé suivant les revendications 1 à 7, **caractérisé par** une station d'ébavurage pour une bande de bande de brins de fil (2), qui est formé par une bande de tôle préalablement entaillée d'un côté ou des deux côtés, dans lequel les brins de fil (1) encore reliés par des ponts après l'entaillage ont été soumis à un processus de laminage pour la transformation subséquente des ponts en surfaces de séparation minces, facilement séparables l'une de l'autre et lisses et présentant peu de bavures lors de la séparation, suite à quoi des fissures formant une nervure de séparation, qui peut encore être séparée localement, apparaissent par rupture par fatigue dans la zone des ponts, après une déformation multiple par flexion autour de leur axe longitudinal, la station d'ébavurage présentant une paire de cylindres de séparation (3) séparant la bande de brins de fil (2) en brins de fil (1), en outre par une unité de cylindres d'écartement (4), dans laquelle une expansion des brins de fil pairs par rapport aux brins de fil impairs (1) a lieu de telle façon que deux faisceaux de brins de fil (1) écartés l'un de l'autre sont formés, en outre par un outil d'ébavurage respectif (5) pour les deux faisceaux de brins de fil (1), ainsi qu'une unité de traction (6) formée de cylindres dans laquelle les brins de fil (1) sont à nouveau réunis en un faisceau commun, afin qu'environ la même traction agisse sur tous les brins de fil.

9. Dispositif suivant la revendication 8, **caractérisé en ce que** l'outil d'ébavurage (5) présente des dents disposées en forme de peigne (6), les dents (6) étant formées comme taillants d'ébavurage.

10. Dispositif suivant la revendication 9, **caractérisé en ce que** les dents (6) sont alignées en oblique par rapport à la direction d'avancement des brins de fil (1).

11. Dispositif suivant l'une des revendications 9 ou 10, **caractérisé en ce que** les dents (6) sont disposées selon angle d'environ 45° par rapport aux brins de fil (1).

12. Dispositif suivant l'une des revendications 9 ou 11, **caractérisé en ce que** l'outil d'ébavurage (5) est réglable en direction longitudinale des dents (6).

13. Dispositif suivant l'une des revendications 9 à 12, **caractérisé en ce que** les cylindres de l'unité de cylindres d'écartement (4) et de l'unité de traction (6) sont pourvus de rainures de guidage pour les brins de fil (1).
